# EUROPÄISCHE PATENTSCHRIFT

(11) **EP 2 481 942 B1**
(45) Veröffentlichungstag und Bekanntmachung des Hinweises auf die Patenterteilung: **16.10.2013**
(21) Anmeldenummer: 11152710.7
(22) Anmeldetag: 31.01.2011
(51) Int. Cl.: F16D 1/096

(54) **Spannvorrichtung zur Befestigung einer Hohlwelle oder Nabe auf einer Welle**
Tensioning device for fixing a quill shaft or collar to a shaft
Dispositif de serrage pour la fixation d'un arbre creux ou d'un moyeu sur un arbre

(43) Veröffentlichungstag der Anmeldung: 01.08.2012
(73) Patentinhaber: Siemens Aktiengesellschaft, 80333 München (DE)
(72) Erfinder: Boeing, Georg, 72108 Rottenburg (DE)
(74) Vertreter: Maier, Daniel Oliver

(56) Entgegenhaltungen:
- EP-A2- 1 884 672
- WO-A2-02/053940
- US-A- 2 811 861
- US-A- 3 590 652

## Beschreibung

Die Erfindung betrifft eine Spannvorrichtung zur Befestigung einer Hohlwelle oder Nabe auf einer Welle.

In WO 02/053940 A2 ist eine Vorrichtung zur Befestigung einer Hohlwelle auf einer Welle bekannt, wobei die Hohlwelle an einem Ende einen Innenkonus und ein Außengewinde aufweist. Auf das Außengewinde ist ein mit einem Innengewinde versehenes Ringelement aufgeschraubt, das an einer Stirnseite mehrere sich axial erstreckende Gewindebohrungen aufweist. Ein mit einem Außenkonus versehenes Zentrierelement, das an einem stirnseitigen Flansch mehrere sich axial erstreckende Durchgangsöffnungen für Befestigungsschrauben aufweist, ist mit einem den Außenkonus umfassenden Abschnitt radial zwischen der Welle und dem Innenkonus der Hohlwelle oder Nabe angeordnet sowie mit dem Ringelement verschraubt. Da durch das Zentrierelement lediglich eine Zentrierung von Hohlwelle und Welle erfolgt, ist für eine Drehmomentübertragung eine zusätzliche Paßfederverbindung vorgesehen.

Aus DE 10 2009 013 566 A1 ist eine Spannvorrichtung zur Befestigung einer Hohlwelle auf einer Hohlwelle bekannt, bei der die Hohlwelle einen Schrumpfbereich aufweist, in dem ein geschlossenes Langloch vorgesehen ist. Das Langloch erstreckt sich über den gesamten Schrumpfbereich. Es kann auch eine Vielzahl von Langlöchern vorgesehen sein, deren Projektion auf die Achse der Hohlwelle sich über die gesamt axiale Länge des Schrumpfbereichs erstreckt. Dabei ist ein Langloch geschlossen. Dadurch wird die Verformbarkeit der Hohlwelle erhöht. Die Verformung selbst wird durch eine Schrumpfscheibe erzielt.

In EP 1 884 672 A2 ist ein Schrumpfscheibe beschrieben, die eine Preßverbindung zwischen zwei konzentrischen Wellen ermöglicht. Die Schrumpfscheibe umfaßt einen Innenring und einen Außenring, die entlang einer konischen Kontaktfläche mittels einer Verschraubung gegeneinander verspannbar angeordnet sind. Außenring und Innenring sind aus einem Gußwerkstoff gefertigt.

EP 1 328 735 B1 betrifft eine Spannvorrichtung zur Befestigung einer Hohlwelle oder eines Hohlteils auf einer Vollwelle, bei der die Hohlwelle oder das Hohlteil an beiden Enden jeweils einen Innenkonus zur Aufnahme einer Adapterbuchse aufweist. Die Adapterbuchsen weisen jeweils einen entsprechenden Außenkonus auf und liegen auf der Vollwelle. Darüber hinaus ist eine Schrumpfscheibe mit zumindest einem Preßring vorgesehen. Die Schrumpfscheibe übt mittels des Preßrings eine Schrumpfkraft auf die Hohlwelle oder das Hohlteil aus. Des weiteren weist der Preßring einen axialen Längsschlitz auf. An einem von der Schrumpfscheibe abgewandten Ende der Hohlwelle oder des Hohlteils ist ein Klemmring zur axialen Fixierung der dortigen Adapterbuchse vorgesehen. Die Adapterbuchsen weisen keine Preßverbindungsfunktion, sondern dienen lediglich einem Wellenaußendurchmesserausgleich.

Aus US 3 590 652 A ist eine Spannvorrichtung gemäß dem Oberbegriff von Anspruch 1 bekannt. Allerdings ist das Ringelelement 112' in axialer Richtung wesentlich schmäler als der den Außenkonus aufweisende Abschnitt des Spannelementes 90.

Der vorliegenden Erfindung liegt die Aufgabe zugrunde, eine Spannvorrichtung zur Befestigung einer Hohlwelle oder Nabe auf einer Welle zu schaffen, die erhöhte radiale Kräfte in einer Preßverbindung und eine vereinfachte Montage ermöglicht.

Diese Aufgabe wird erfindungsgemäß durch eine Spannvorrichtung mit den in Anspruch 1 angegebenen Merkmalen gelöst. Vorteilhafte Weiterbildungen sind in den abhängigen Ansprüchen angegeben.

Die erfindungsgemäße Spannvorrichtung dient zur Befestigung einer Hohlwelle oder Nabe auf einer Welle, insbesondere einer Vollwelle. Die Hohlwelle oder Nabe weist dabei an einem Ende einen Innenkonus und eine Auflageschulter auf. Zusätzlich ist ein mit einer zylindrischen Innenfläche versehenes Ringelement vorgesehen, das an einer Stirnseite mehrere sich axial erstreckende Gewindebohrungen aufweist und auf die Hohlwelle oder Nabe aufgesteckt ist. Das Ringelement ist axial einerseits durch die Auflageschulter und andererseits durch einen an der Hohlwelle oder Nabe befestigten Sicherungsring fixiert. Ein mit einem Außenkonus versehenes Spannelement, das an einem stirnseitigen Flansch mehrere sich axial erstreckende Durchgangsöffnungen für Spannschrauben aufweist, ist mit einem den Außenkonus umfassenden Abschnitt radial zwischen der Welle und dem Innenkonus der Hohlwelle oder Nabe angeordnet sowie mit dem Ringelement verschraubt. Durch das auf die Hohlwelle oder Nabe aufsteckbare Ringelement ergibt sich eine verbesserte Aufnahme radialer Kräfte, da das Ringelement die Hohlwelle oder Nabe sowie den Außenkonus des Spannelements von außen radial umfaßt und deren radiale Aufweitung verhindert. Eine vereinfachte Montage resultiert daraus, daß das Ringelement bereits Gewindebohrungen für eine Verbindung mit dem Spannelement aufweist, so daß das Spannelement über das Ringelement bei der Montage zuverlässig fixiert ist.

Vorzugsweise sind korrespondiere Gewindebohrungen und Durchgangsöffnungen deckungsgleich angeordnet sind. Darüber hinaus können Gewindebohrungen und Durchgangsöffnungen in Umfangsrichtung jeweils äquidistant verteilt sein. Dies ermöglicht eine gleichmäßige Verteilung radialer auf die Hohlwelle oder Nabe einwirkender Kräfte. Die Spannschrauben können beispielsweise durch die Durchgangsöffnungen in die Gewindebohrungen eingeführt und das Spannelement mittels der Spannschrauben mit dem Ringelement verbunden und gegenüber diesem axial verspannt werden. Hieraus resultiert eine einfache Montage der Spannvorrichtung.

Entsprechend einer bevorzugten Ausgestaltung der vorliegenden Erfindung weist das Ringelement eine im wesentlichen zylindrische Außenfläche und eine zylindrische Innenfläche auf. Dies ermöglicht eine besonders gute Aufnahme radialer Kräfte. Vorzugsweise ist das Ringelement mit einem vorgebbaren bzw. geringen Spielsitz auf der Hohlwelle oder Nabe positioniert.

Das Ringelement und der den Außenkonus umfassende Abschnitt des Spannelements weisen entsprechend der vorliegenden Erfindung gleiche axiale Ausdehnungen auf. Das Ringelement und das Spannelement können beispielsweise aus Gusseisen sein. Auf diese Weise ergibt sich eine kostengünstige Herstellung einer Spannvorrichtung zur Befestigung einer Hohlwelle oder Nabe auf einer Welle. Ringelement und Spannelement können insbesondere aus vergütetem oder wärmebehandeltem duktilen Sphäroguß oder aus Grauguß sein. Stähle oder Schmiedeteile sind ebenfalls möglich und zulässig

Auch an einem zweiten Ende kann die Hohlwelle oder Nabe entsprechend einer weiteren Ausführungsform der vorliegenden einen Innenkonus und ein Außengewinde aufweisen. In diesem Fall ist am zweiten Ende der Hohlwelle oder Nabe eine mit einem Außenkonus versehene Hülse vorgesehen, die mit einem dem Außenkonus umfassenden Abschnitt radial zwischen der Welle und der Hohlwelle oder Nabe angeordnet ist. Darüber hinaus weist die Hülse einen stirnseitigen Flansch auf, mit dem ein die Hohlwelle oder Nabe radial umgebender Außenring mit Innengewinde verbunden ist. Dabei ist zwischen dem Außenring und dem den Außenkonus umfassenden Abschnitt der Hülse eine ringförmige Nut gebildet. Der Außenring ist am zweiten Ende auf die Hohlwelle oder Nabe aufschraubbar. Auf diese Weise sind keine zusätzlichen Bauteile zur axialen Fixierung der Hülse erforderlich.

Die vorliegende Erfindung wird nachfolgend an einem Ausführungsbeispiel anhand der Zeichnung näher erläutert. Es zeigt
- Figur 1: eine Querschnittsdarstellung einer nicht erfindungsgemäßen Spannvorrichtung an einem ersten Ende einer Hohlwelle,
- Figur 2: eine Querschnittsdarstellung der Spannvorrichtung gemäß Figur 1 an einem zweiten Ende der Hohlwelle.

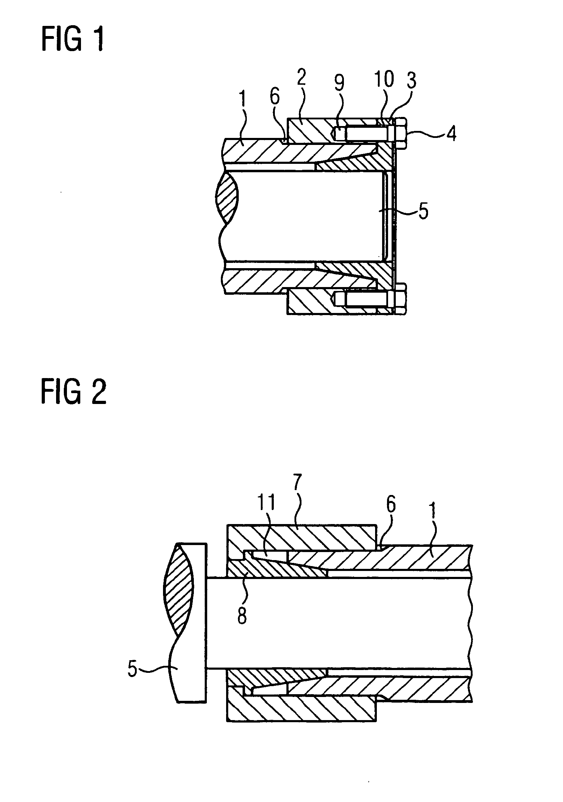

Bei der in Figur 1 dargestellten Spannvorrichtung zur Befestigung einer Hohlwelle 1 auf einer Vollwelle 5 weist die Hohlwelle 1 an einem ersten Ende einen Innenkonus und ein Außengewinde 6 auf. Auf das Außengewinde 6 ist ein mit einem Innengewinde versehenes Ringelement 2 aufgeschraubt, das an einer Stirnseite mehrere sich axial erstreckende Gewindebohrungen 9 aufweist. Ein mit einem Außenkonus versehenes Spannelement 3 ist mit einem den Außenkonus umfassenden Abschnitt radial zwischen der Vollwelle 5 und dem Innenkonus der Hohlwelle 1 angeordnet sowie mit dem Ringelement 2 verschraubt. Hierzu weist das Spannelement 3 an einem stirnseitigen Flansch mehrere sich axial erstreckende Durchgangsöffnungen 10 für Spannschrauben 4 auf. Korrespondiere Gewindebohrungen 9 und Durchgangsöffnungen 10 sind dabei deckungsgleich angeordnet und in Umfangsrichtung jeweils äquidistant verteilt. Die Spannschrauben 4 sind durch die Durchgangsöffnungen 10 in die Gewindebohrungen 9 eingeführt. Auf diese Weise kann das das Spannelement 3 mittels der Spannschrauben 4 mit dem Ringelement 2 verbunden und gegenüber diesem axial verspannt werden.

Alternativ zur Ausgestaltung gemäß Figur 1 ist erfindungsgemäß die Hohlwelle anstelle eines Außengewindes mit einer Auflageschulter für das Ringelement versehen, das anstelle eines Innengewindes eine zylindrische Innenfläche aufweist. In diesem Fall ist das Ringelement axial einerseits durch die Auflageschulter und andererseits durch einen an der Hohlwelle befestigten Sicherungsring fixiert.

Das Ringelement 2 weist eine im wesentlichen zylindrische Außenfläche und eine zylindrische Innenfläche auf und ist mit einem geringen Spielsitz auf der Hohlwelle 1 positioniert. Ferner weisen das Ringelement 2 und der den Außenkonus umfassende Abschnitt des Spannelements 3 gleiche axiale Ausdehnungen auf. Das Ringelement 2 und das Spannelement 3 können beispielsweise aus Gußeisen gefertigt sein, insbesondere aus vergütetem Sphäroguß, wärmebehandeltem duktilen Sphäroguß oder Grauguß. Grundsätzlich können auch Stähle oder Schmiedeteile verwendet werden.

Entsprechend Figur 2 kann die Hohlwelle 1 an einem zweiten Ende einen Innenkonus und ein Außengewinde 6 aufweisen. Zusätzlich ist in diesem Fall am zweiten Ende der Hohlwelle 1 eine mit einem Außenkonus versehene Hülse 8 vorgesehen, die mit einem dem Außenkonus umfassenden Abschnitt radial zwischen der Vollwelle 5 und der Hohlwelle 1 angeordnet ist. Die Hülse 8 weist einen stirnseitigen Flansch auf, mit dem ein die Hohlwelle 1 radial umgebender Außenring 7 mit Innengewinde verbunden ist. Der Außenring 7 wird am zweiten Ende auf die Hohlwelle 1 aufgeschraubt. Dabei können sich Hülse 8 und Außenring 7 gegeneinander verdrehen. Zwischen dem Außenring 7 und dem den Außenkonus umfassenden Abschnitt der Hülse 8 ist entsprechend Figur 2 eine ringförmige Nut 11 gebildet.

Am stirnseitigen Flansch ist an der Hülse 8 eine Auflageschulter für den Außenring 7 gebildet, dessen axiale Beweglichkeit durch die Auflageschulter an der Hülse 8 begrenzt ist, und der eine korrespondierende Auflageschulter für die Hülse 8 aufweist. Zusätzlich kann der Außenring 7 durch einen am stirnseitigen Flansch der Hülse 8 befestigten Sicherungsring fixiert sein, so daß die axiale Beweglichkeit des Außenrings 7 relativ zur Hülse 8 einerseits durch die Auflageschulter an der Hülse 8 und andererseits durch den an der Hülse 8 befestigten Sicherungsring begrenzt ist. Der Sicherungsring ist einem axialen Abstand von der Auflageschulter an der Hülse angeordnet. Mit Einbringen des Sicherungsrings wird eine axiale Verbindung von Außenring 7 und Hülse 8 erreicht bei gleichzeitiger relativer Verdrehbarkeit beider Teile.

Die Anwendung der vorliegenden Erfindung ist nicht auf das beschriebene Ausführungsbeispiel beschränkt.

## Patentansprüche

1. Spannvorrichtung zur Befestigung einer Hohlwelle (1) oder Nabe auf einer Welle (5), bei der
- die Hohlwelle (1) oder Nabe an einem Ende einen Innenkonus und eine Auflageschulter aufweist,
- ein mit einer zylindrischen Innenfläche versehenes Ringelement (2), das an einer Stirnseite mehrere sich axial erstreckende Gewindebohrungen (9) aufweist und auf die Hohlwelle (1) oder Nabe aufgesteckt ist, axial einerseits durch die Auflageschulter und andererseits durch einen an der Hohlwelle (1) oder Nabe befestigten Sicherungsring fixiert ist, und
- ein mit einem Außenkonus versehenes Spannelement (3), das an einem stirnseitigen Flansch mehrere sich axial erstreckende Durchgangsöffnungen (10) für Spannschrauben (4) aufweist, mit einem den Außenkonus umfassenden Abschnitt radial zwischen der Welle (5) und dem Innenkonus der Hohlwelle (1) oder Nabe angeordnet sowie mit dem Ringelement (2) verschraubt ist,
**dadurch gekennzeichnet, dass** das Ringelement (2) und der den Außenkonus umfassende Abschnitt des Spannelements gleiche axiale Ausdehnungen aufweisen.

2. Spannvorrichtung nach Anspruch 1,
bei der korrespondierende Gewindebohrungen (9) und Durchgangsöffnungen (10) deckungsgleich angeordnet sind.

3. Spannvorrichtung nach Anspruch 2,
bei der Gewindebohrungen (9) und Durchgangsöffnungen (10) in Umfangsrichtung jeweils äquidistant verteilt sind.

4. Spannvorrichtung nach einem der Ansprüche 1 bis 3,
bei der die Spannschrauben (4) durch die Durchgangsöffnungen (10) in die Gewindebohrungen (9) eingeführt sind, und bei der das Spannelement (3) mittels der Spannschrauben (4) mit dem Ringelement (2) verbunden und gegenüber diesem axial verspannbar ist.

5. Spannvorrichtung nach einem der Ansprüche 1 bis 4,
bei der das Ringelement (2) eine im wesentlichen zylindrische Außenfläche und eine zylindrische Innenfläche aufweist.

6. Spannvorrichtung nach einem der Ansprüche 1 bis 5,
bei der das Ringelement (2) mit einem vorgebbaren Spielsitz auf der Hohlwelle (1) oder Nabe positioniert ist.

7. Spannvorrichtung nach einem der Ansprüche 1 bis 6,
bei der das Ringelement (2) und das Spannelement (3) aus Gußeisen sind.

8. Spannvorrichtung nach Anspruch 7,
bei der das Ringelement (2) und das Spannelement (3) aus Sphäroguß sind.

9. Spannvorrichtung nach Anspruch 8,
bei der das Ringelement (2) und das Spannelement (3) aus vergütetem Sphäroguß sind.

10. Spannvorrichtung nach Anspruch 8,
bei der das Ringelement (2) und das Spannelement (3) aus wärmebehandeltem duktilen Sphäroguß sind.

11. Spannvorrichtung nach Anspruch 7,
bei der das Ringelement (2) und das Spannelement (3) aus Grauguß sind.

12. Spannvorrichtung nach einem der Ansprüche 1 bis 11,
bei der die Hohlwelle (1) oder Nabe an einem zweiten Ende einen Innenkonus und ein Außengewinde (6) aufweist, und bei der am zweiten Ende der Hohlwelle (1) oder Nabe eine mit einem Außenkonus versehene Hülse (8) vorgesehen ist, die mit einem dem Außenkonus umfassenden Abschnitt radial zwischen der Welle (5) und der Hohlwelle (1) oder Nabe angeordnet ist, und bei der die Hülse (8) einen stirnseitigen Flansch aufweist, mit dem ein die Hohlwelle (1) oder Nabe radial umgebender Außenring (7) mit Innengewinde verbunden ist, wobei zwischen dem Außenring (7) und dem den Außenkonus umfassenden Abschnitt der Hülse (8) eine ringförmige Nut (11) gebildet ist, und bei der der Außenring (7) am zweiten Ende auf die Hohlwelle (1) oder Nabe aufgeschraubt ist.

13. Spannvorrichtung nach Anspruch 12,
bei der am stirnseitigen Flansch der Hülse (8) eine Auflageschulter für den Außenring (7) gebildet ist, dessen axiale Beweglichkeit durch die Auflageschulter an der Hülse (8) begrenzt ist, und der eine korrespondierende Auflageschulter für die Hülse (8) aufweist.

14. Spannvorrichtung nach Anspruch 13,
bei der am stirnseitigen Flansch der Hülse (8) ein Sicherungsring für den Außenring (7) von der Auflageschulter an der Hülse (8) axial beabstandet befestigt ist, wobei die axiale Beweglichkeit des Außenrings (7) relativ zur Hülse (8) einerseits durch die Auflageschulter an der Hülse (8) und andererseits durch den an der Hülse (8) befestigten Sicherungsring begrenzt ist.

## Claims

1. Clamping apparatus for fastening a hollow shaft (1) or hub to a shaft (5), wherein
- the hollow shaft (1) or hub has an inner taper and a support shoulder at one end,
- a ring element (2), which is provided with a cylindrical inner surface, has a plurality of axially extending threaded bores (9) at an end side and is pushed onto the hollow shaft (1) or hub, is fixed axially on the one hand by the support shoulder and on the other hand by a securing ring fastened to the hollow shaft (1) or hub, and
- a clamping element (3), which is provided with an outer taper and has a plurality of axially extending passage openings (10) for clamping screws (4) on an end-side flange, is arranged with a portion which comprises the outer taper radially between the shaft (5) and the inner taper of the hollow shaft (1) or hub and is screwed to the ring element (2),
**characterized in that** the ring element (2) and the portion of the clamping element which comprises the outer taper have identical axial extents.

2. Clamping apparatus according to Claim 1,
wherein corresponding threaded bores (9) and passage openings (10) are arranged congruently.

3. Clamping apparatus according to Claim 2,
wherein threaded bores (9) and passage openings (10) are distributed in each case equidistantly in the circumferential direction.

4. Clamping apparatus according to one of Claims 1 to 3,
wherein the clamping screws (4) are inserted into the threaded bores (9) through the passage openings (10), and wherein the clamping element (3) is connected by means of the clamping screws (4) to the ring element (2) and can be clamped axially with respect to the latter.

5. Clamping apparatus according to one of Claims 1 to 4, wherein the ring element (2) has a substantially cylindrical outer surface and a cylindrical inner surface.

6. Clamping apparatus according to one of Claims 1 to 5, wherein the ring element (2) is positioned on the hollow shaft (1) or hub with a predefinable clearance fit.

7. Clamping apparatus according to one of Claims 1 to 6, wherein the ring element (2) and the clamping element (3) are made of cast iron.

8. Clamping apparatus according to Claim 7,
wherein the ring element (2) and the clamping element (3) are made of nodular cast iron.

9. Clamping apparatus according to Claim 8,
wherein the ring element (2) and the clamping element (3) are made of quenched and tempered nodular cast iron.

10. Clamping apparatus according to Claim 8,
wherein the ring element (2) and the clamping element (3) are made of heat-treated, ductile nodular cast iron.

11. Clamping apparatus according to Claim 7,
wherein the ring element (2) and the clamping element (3) are made of gray cast iron.

12. Clamping apparatus according to one of Claims 1 to 11, wherein the hollow shaft (1) or hub has an inner taper and an outer thread (6) at a second end, and wherein the second end of the hollow shaft (1) or hub is provided with a sleeve (8), which is provided with an outer taper and is arranged with a portion which comprises the outer taper radially between the shaft (5) and the hollow shaft (1) or hub, and wherein the sleeve (8) has an end-side flange to which an outer ring (7) which radially surrounds the hollow shaft (1) or hub and has an inner thread is connected, wherein an annular groove (11) is formed between the outer ring (7) and the portion of the sleeve (8) which comprises the outer taper, and wherein the outer ring (7) is screwed onto the hollow shaft (1) or hub at the second end.

13. Clamping apparatus according to Claim 12,
wherein a support shoulder for the outer ring (7) is formed on the end-side flange of the sleeve (8), the axial mobility of which outer ring is limited by the support shoulder on the sleeve (8) and which outer ring has a corresponding support shoulder for the sleeve (8).

14. Clamping apparatus according to Claim 13,
wherein a securing ring for the outer ring (7) is fastened on the end-side flange of the sleeve (8) at an axial distance from the support shoulder on the sleeve (8), wherein the axial mobility of the outer ring (7) in relation to the sleeve (8) is limited on the one hand by the support shoulder on the sleeve (8) and on the other hand by the securing ring fastened to the sleeve (8).

## Revendications

1. Dispositif de serrage pour la fixation d'un arbre ( 1 ) creux ou d'un moyeu sur un arbre ( 5 ), dans lequel
- l'arbre ( 1 ) creux ou le moyeu a, à une extrémité, un cône intérieur et un épaulement d'appui,
- un élément ( 2 ) annulaire, qui est pourvu d'une surface intérieure cylindrique qui a sur un côté frontal plusieurs taraudages ( 9 ) s'étendant axialement et qui est emmanché sur l'arbre ( 1 ) creux ou sur le moyeu, est immobilisé axialement d'une part par l'épaulement d'appui et d'autre part par un anneau de sécurité fixé à l'arbre ( 1 ) creux ou au moyeu, et
- un élément ( 3 ) de serrage, qui est pourvu d'un cône extérieur, qui a sur une bride du côté frontal plusieurs ouvertures ( 10 ) de passage s'étendant axialement pour des vis ( 4 ) de serrage, qui a, entourant le cône extérieur, une partie disposée radialement entre l'arbre ( 5 ) et le cône intérieur de l'arbre ( 1 ) creux ou du moyeu et qui est vissé à l'élément ( 2 ) annulaire,
**caractérisé en ce que**, l'élément ( 2 ) annulaire et la partie, entourant le cône extérieur, de l'élément de serrage ont de mêmes étendues axiales.

2. Dispositif suivant la revendication 1,
dans lequel des taraudages ( 9 ) et des ouvertures ( 10 ) de passage qui se correspondent sont disposés en coïncidence.

3. Dispositif suivant la revendication 2,
dans lequel des taraudages ( 9 ) et des ouvertures ( 10 ) de passage sont répartis de manière équidistantes dans la direction périphérique.

4. Dispositif suivant l'une des revendications 1 à 3,
dans lequel les vis ( 4 ) de serrage sont introduites par les ouvertures ( 10 ) de passage dans les taraudages ( 9 ) et dans lequel l'élément ( 3 ) de serrage est relié au moyen des vis ( 4 ) de serrage à l'élément ( 2 ) annulaire et peut être bloqué axialement par rapport à celui-ci.

5. Dispositif suivant l'une des revendications 1 à 4,
dans lequel l'élément ( 2 ) annulaire a une surface extérieure sensiblement cylindrique et une surface intérieure cylindrique.

6. Dispositif suivant l'une des revendications 1 à 5,
dans lequel l'élément ( 2 ) annulaire est mis en position avec un ajustement avec jeu pouvant être prescrit sur l'arbre ( 1 ) creux ou sur le moyeu.

7. Dispositif suivant l'une des revendications 1 à 6,
dans lequel l'élément ( 2 ) annulaire et l'élément ( 3 ) de serrage sont en fonte.

8. Dispositif suivant la revendication 7,
dans lequel l'élément ( 2 ) annulaire et l'élément ( 3 ) de serrage sont en fonte à graphite sphéroïdale.

9. Dispositif suivant la revendication 8,
dans lequel l'élément ( 2 ) annulaire et l'élément ( 3 ) de serrage sont en fonte à graphite sphéroïdale trempé.

10. Dispositif suivant la revendication 8,
dans lequel l'élément ( 2 ) annulaire et l'élément ( 3 ) de serrage sont en fonte à graphite sphéroïdale ductile traitée à la chaleur.

11. Dispositif suivant la revendication 7,
dans lequel l'élément ( 2 ) annulaire et l'élément ( 3 ) de serrage sont en fonte grise.

12. Dispositif de serrage suivant l'une des revendications 1 à 11,
dans lequel l'arbre ( 1 ) creux ou le moyeu a, à une seconde extrémité, un cône intérieur et un filetage ( 6 ) et dans lequel à la seconde extrémité de l'arbre ( 1 ) creux ou du moyeu est prévu un manchon ( 8 ) qui est pourvu d'un cône extérieur et qui est disposé, par une partie entourant le cône extérieur, radialement entre l'arbre ( 5 ) et l'arbre ( 1 ) creux ou le moyeu et dans lequel le manchon ( 8 ) a une bride du côté frontal à laquelle est relié un anneau ( 7 ) extérieur à taraudage entourant radialement l'arbre ( 1 ) creux ou le moyeu, une rainure ( 11 ) annulaire étant formée entre l'anneau ( 7 ) extérieur et la partie, comprenant le cône extérieur, du manchon ( 8 ) et dans lequel l'anneau ( 7 ) extérieur est vissé à la deuxième extrémité sur l'arbre ( 1 ) creux ou sur le moyeu.

13. Dispositif suivant la revendication 12,
dans lequel sur la bride du côté frontal du manchon ( 8 ) est formé un épaulement d'appui de l'anneau ( 7 ) extérieur, dont la mobilité axiale est limitée par l'épaulement d'appui sur le manchon ( 8 ) et qui a un épaulement d'appui correspondant pour le manchon ( 8 ).

14. Dispositif suivant la revendication 13,
dans lequel à la bride du côté frontal du manchon ( 8 ) est fixé un anneau de sécurité pour l'anneau ( 7 ) extérieur à distance axialement de l'épaulement d'appui sur le manchon ( 8 ), la mobilité axiale de l'anneau ( 7 ) extérieur par rapport au manchon ( 8 ) étant limitée d'une part par l'épaulement d'appui sur le manchon ( 8 ) et d'autre part par l'anneau de sécurité fixé au manchon ( 8 ).
